# EUROPEAN PATENT APPLICATION

(11) **EP 4 845 097 A1**
(43) Date of publication of application: **25.11.2026**
(21) Application number: 25751201.2
(22) Date of filing: 21.01.2025
(51) Int. Cl.: H04L 9/40

(54) **COMMUNICATION METHOD AND APPARATUS**

(30) Priority: 09.02.2024 CN 202410179008
(71) Applicant: Huawei Technologies Co., Ltd., Shenzhen, Guangdong 518129 (CN)
(72) Inventor: DING, Hui, Shenzhen, Guangdong 518129 (CN); ZHU, Jintao, Shenzhen, Guangdong 518129 (CN); ZHANG, Bo, Shenzhen, Guangdong 518129 (CN); MO, Ruo, Shenzhen, Guangdong 518129 (CN); LI, Zhuoming, Shenzhen, Guangdong 518129 (CN)
(74) Representative: Isarpatent
(86) International application number: PCT/CN2025/073708
(87) International publication number: WO 2025/167599

(57) **Abstract**

This application provides a communication method and apparatus. The method includes: A first network device receives a first message from a first application, where the first message includes a first persona identifier, the first persona identifier identifies an entity that accesses the first application, and the first message is used to request attribute information of a target attribute identifier corresponding to the entity. The first network device sends, to the first application, the attribute information corresponding to the target attribute identifier, where the attribute information corresponding to the target attribute identifier is determined from at least one piece of attribute information corresponding to the first persona identifier. In the method, the first application may directly obtain, from the first network device, the attribute information corresponding to the first persona identifier, and a user does not need to fill in the attribute information in the first application, so that the first application can quickly and efficiently obtain the attribute information.

## Description

### CROSS-REFERENCE TO RELATED APPLICATIONS

This application claims priority to Chinese Patent Application No. 202410179008.2, filed with the China National Intellectual Property Administration on February 9, 2024 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

With the rapid development of network technologies, more and more applications are available to users. If a user creates a different user account and password for each available application, a burden of managing a plurality of groups of user accounts and passwords will be imposed. If the user creates a same user account and password for all the available applications, a risk of leaking the user accounts and passwords for the respective applications will be increased.

To resolve the foregoing problems, a federated identity architecture may be deployed to manage user accounts and passwords for different applications. Generally, for any to-be-accessed application, the user may first obtain a user identifier from a trusted identity provider (identity provider, IDP) node, and log in to the to-be-accessed application by using the user identifier. As a unique identifier, the user identifier is used to distinguish between different users. The user identifier may be a number, a character string, or the like.

However, after the user logs in to the to-be-accessed application by using the user identifier, in some cases, the to-be-accessed application further needs to obtain attribute information of the user, including but not limited to a user name, a user address, and the like. If the user provides the foregoing attribute information when using different to-be-accessed applications, it is time-consuming to repeatedly provide the same attribute information. How the to-be-accessed application quickly and efficiently obtains the attribute information of the user is a technical problem to be urgently resolved currently.

### SUMMARY

This application provides a communication method and apparatus, to quickly and efficiently obtain attribute information of a user.

According to a first aspect, an embodiment of this application provides a communication method. The method is performed by a first network device or a module or a chip in the first network device. Herein, an example in which the method is performed by the first network device is used for description. The method includes: The first network device receives a first message from a first application, where the first message includes a first persona identifier, the first persona identifier identifies an entity that accesses the first application, and the first message is used to request attribute information of a target attribute identifier corresponding to the entity. The first network device sends, to the first application, the attribute information corresponding to the target attribute identifier, where the attribute information corresponding to the target attribute identifier is determined from at least one piece of attribute information corresponding to the first persona identifier.

In the method, the first application may directly obtain, from the first network device, the attribute information corresponding to the first persona identifier, and a user does not need to fill in the attribute information in the first application, so that the first application can quickly and efficiently obtain the attribute information. In addition, because the first persona identifier is used to log in to the first application, the first application can obtain, from the first network device, only the attribute information corresponding to the first persona identifier, but cannot obtain attribute information corresponding to another persona identifier. Therefore, attribute information corresponding to different persona identifiers can be isolated, so that the attribute information corresponding to the different persona identifiers can be effectively managed.

In a possible design, the first message further includes a first authentication credential, and the method may further include: The first network device confirms, by using the first authentication credential, that the first persona identifier has been verified.

In a possible design, the first message further includes a first identifier, the first identifier identifies the first application or a target service in the first application, and the target service is a service that is in the first application and accessed by the entity. Before that the first network device determines the at least one piece of attribute information corresponding to the first persona identifier, the following may be further included: The first network device confirms, by using access permission information corresponding to the first persona identifier, that the first identifier has been verified.

In a possible design, the first identifier identifies the first application. That the first network device confirms, by using the access permission information corresponding to the first persona identifier, that the first identifier has been verified may include: If the access permission information corresponding to the first persona identifier includes the first identifier, the first network device confirms that the first identifier has been verified.

In a possible design, the first identifier identifies the target service. That the first network device confirms, by using the access permission information corresponding to the first persona identifier, that the first identifier has been verified may include: The first network device first determines a service type of the target service based on the first identifier. If the access permission information corresponding to the first persona identifier includes the service type of the target service, the first network device confirms that the first identifier has been verified.

In a possible design, the method may further include: The first network device sends a second message to a terminal device, where the second message is used to request verification information corresponding to a first verification identifier, the first verification identifier is determined based on a first mapping relationship and the target attribute identifier, the first mapping relationship includes a plurality of attribute identifiers and a respective first verification identifier corresponding to each of the plurality of attribute identifiers, the plurality of attribute identifiers include the target attribute identifier, and the first application is installed on the terminal device. The first network device receives a third message from the terminal device, where the third message includes the verification information corresponding to the first verification identifier, the verification information corresponding to the first verification identifier has been verified by the first network device, and the third message is used to request to verify the verification information.

In a possible design, the method may further include: The first network device sends a fourth message to a terminal device, where the fourth message is used to request an authorization, and the authorization includes allowing the first application or the target service related to the first identifier to obtain the attribute information corresponding to the target attribute identifier. The first network device receives a fifth message from the terminal device, where the fifth message indicates the authorization.

In a possible design, the method may further include: The first network device receives a sixth message from the terminal device, where the sixth message includes a root identifier of the entity, the root identifier uniquely identifies the entity, and the sixth message is used to request the first persona identifier corresponding to the root identifier. The first network device generates the first persona identifier corresponding to the root identifier. The first network device sends the first persona identifier to the terminal device. According to this design, the persona identifier of the digital identity entity can be conveniently determined.

In a possible design, the sixth message further includes a second authentication credential, and the method may further include: The first network device confirms, by using the second authentication credential, that the root identifier has been verified.

In a possible design, the sixth message further includes a second identifier, and the second identifier identifies identity information of the entity. The method may further include: The first network device sends a seventh message to a second network device, where the seventh message is used to request to verify the second identifier. The first network device receives an eighth message from the second network device, where the eighth message indicates that the second identifier has been verified.

In a possible design, the second identifier includes an identity of the entity, the second network device is a preset identity providing node, the seventh message is used to request to verify the identity of the entity, and the eighth message indicates that the identity of the entity has been verified.

In a possible design, the second identifier includes an identity of the entity and an identifier of a target identity providing node.

That the first network device sends the seventh message to the second network device may include: The first network device sends the seventh message to the target identity providing node based on the identifier of the target identity providing node, where the seventh message is used to request to verify the identity of the entity. That the first network device receives the eighth message from the second network device may include: The first network device receives the eighth message from the target identity providing node, where the eighth message indicates that the identity of the entity has been verified.

In a possible design, the first network device sends the seventh message to the target identity providing node by using a verification address corresponding to the identifier of the target identity providing node. The verification address corresponding to the identifier of the target identity providing node is determined based on a second mapping relationship and the identifier of the target identity providing node, the second mapping relationship includes identifiers of a plurality of identity providing nodes and a respective verification address corresponding to each of the identifiers of the plurality of identity providing nodes, and the identifiers of the plurality of identity providing nodes include the identifier of the target identity providing node.

In a possible design, the method may further include: The first network device receives a ninth message from the identity providing node, where the ninth message includes the identifier of the identity providing node and the verification address corresponding to the identifier of the identity providing node. The first network device adds, to the second mapping relationship, the identifier of the identity providing node and the verification address corresponding to the identifier of the identity providing node.

In a possible design, the sixth message further includes an identifier of at least one application or a type of at least one service. The method may further include: The first network device adds the identifier of the at least one application or the type of the at least one service to the access permission information corresponding to the first persona identifier.

In a possible design, the method may further include: The first network device sends the first authentication credential to the terminal device, where the first authentication credential is generated for the first persona identifier.

In a possible design, the method may further include: The first network device receives a tenth message from the terminal device, where the tenth message is used to request the root identifier of the entity. The first network device sends the root identifier to the terminal device. According to this design, a method for conveniently determining the root identifier of the entity is provided.

In a possible design, the tenth message includes an identifier of a subscriber identity module SIM card, and the root identifier is determined based on a subscription permanent identifier SUPI corresponding to the identifier of the SIM card.

In a possible design, the method may further include: The first network device determines, based on first information corresponding to the identifier of the SIM card, attribute information corresponding to the root identifier, where the first information identifies the attribute information of the entity.

In a possible design, the tenth message includes a device identifier of the terminal device, and the root identifier is determined based on the device identifier.

In a possible design, the tenth message further includes second information, and the second information identifies the attribute information of the entity. The method may further include: The first network device determines the second information as attribute information corresponding to the root identifier.

In a possible design, the method may further include: The first network device sends the second authentication credential to the terminal device, where the second authentication credential is generated for the root identifier, and the second authentication credential is used to verify the root identifier.

According to a second aspect, an embodiment of this application provides a communication method. The method is performed by a first application. The method includes: The first application sends a first message to a first network device, where the first message includes a first persona identifier, the first persona identifier identifies an entity that accesses the first application, and the first message is used to request attribute information of a target attribute identifier corresponding to the entity. The first application receives, from the first network device, the attribute information corresponding to the target attribute identifier, where the attribute information corresponding to the target attribute identifier is determined from at least one piece of attribute information corresponding to the first persona identifier.

In the method, the first application may directly obtain, from the first network device, the attribute information corresponding to the first persona identifier, and a user does not need to fill in the attribute information in the first application, so that the first application can quickly and efficiently obtain the attribute information. In addition, because the first persona identifier is used to log in to the first application, the first application can obtain, from the first network device, only the attribute information corresponding to the first persona identifier, but cannot obtain attribute information corresponding to another persona identifier. Therefore, attribute information corresponding to different persona identifiers can be isolated, so that the attribute information corresponding to the different persona identifiers can be effectively managed.

In a possible design, the first message further includes a first authentication credential, and the first authentication credential is used to verify the first persona identifier.

According to a third aspect, this application further provides a communication apparatus. The communication apparatus can implement any method provided in the first aspect or the second aspect. The communication apparatus may be implemented by hardware, or may be implemented by executing corresponding software by hardware. The hardware or the software includes one or more units or modules corresponding to the foregoing functions.

In a possible design, the communication apparatus includes a processor, and the processor is configured to support the communication apparatus in performing a corresponding function performed by the first network device or the first application in the foregoing methods. The communication apparatus further includes a memory, and the memory may be coupled to the processor, and stores program instructions and data that are necessary for the communication apparatus. Optionally, the communication apparatus further includes an interface circuit. The interface circuit is configured to support communication between the communication apparatus and a device like a terminal apparatus.

In a possible design, the communication apparatus includes corresponding functional modules configured to implement the steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit and a communication unit. These units may perform corresponding functions in the foregoing method examples. For details, refer to descriptions in the method provided in the first aspect or the second aspect. Details are not described herein.

According to a fourth aspect, an embodiment of this application further provides a communication apparatus. The communication apparatus includes modules/units for performing any method provided in the first aspect or the second aspect. These modules/units may be implemented by hardware, or may be implemented by executing corresponding software by hardware.

According to a fifth aspect, an embodiment of this application provides a communication apparatus, including a memory and a processor. The processor is configured to execute a computer program or instructions stored in the memory, to cause the communication apparatus to implement any method provided in the first aspect or the second aspect.

According to a sixth aspect, an embodiment of this application further provides a computer-readable storage medium. The computer-readable storage medium includes a computer program. When the computer program is run on a communication apparatus, the computer-readable storage medium is caused to implement any method provided in the first aspect or the second aspect.

According to a seventh aspect, an embodiment of this application further provides a computer program product. When the computer program product is run on a communication apparatus, the communication apparatus is caused to implement any method provided in the first aspect or the second aspect.

According to an eighth aspect, a chip is provided. The chip includes a processor, may further include a memory, and is configured to implement any method provided in the first aspect or the second aspect. The chip may include a chip, or may include a chip and another discrete device.

According to a ninth aspect, a communication system is provided, including a first network device and a first application. The first network device is configured to implement the method in any one of the first aspect and the possible implementations of the first aspect, and the first application is configured to implement the method in any one of the second aspect and the possible implementations of the second aspect.

According to a tenth aspect, this application provides a computer program product. When a computer reads and executes the computer program product, the computer is caused to implement any method provided in the first aspect or the second aspect.

These or other aspects of this application are more concise and easier to understand in descriptions of the following embodiments.

### BRIEF DESCRIPTION OF DRAWINGS

FIG. 1 is a diagram of a structure of a communication system according to an embodiment of this application;
FIG. 2 is a schematic flowchart of a communication method according to an embodiment of this application;
FIG. 3 is a diagram of a structure of digital identity information according to an embodiment of this application;
FIG. 4 is a schematic flowchart of a communication method according to an embodiment of this application;
FIG. 5 is a diagram of a structure of digital identity information according to an embodiment of this application;
FIG. 6 is a diagram of a structure of digital identity information according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10a and FIG. 10b are a schematic flowchart of a communication method according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

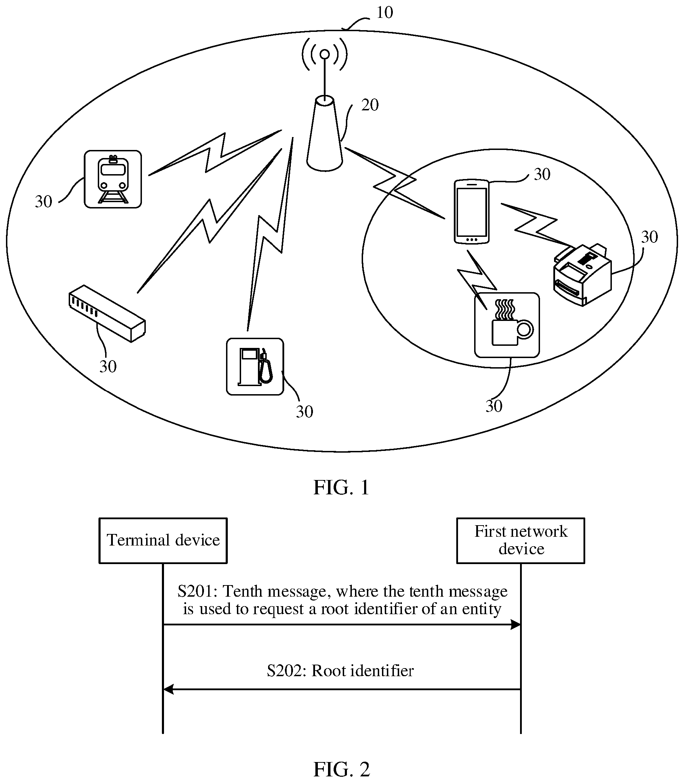

FIG. 1 is a diagram of a communication system to which an embodiment of this application is applicable. As shown in FIG. 1, the communication system 10 includes one or more network devices 20 and one or more terminal devices 30. An interface between the network device and the terminal device may be a Uu interface (or referred to as an air interface), and data transmission may be performed between the network device 20 and the terminal device 30 by using an air interface resource. The terminal device may access a data network (data network, DN) via the network device. The following describes components of the communication system.

### (1) Terminal device

The terminal device includes a device that provides voice and/or data connectivity for a user. For example, the terminal device is a device that has a wireless transceiver function; and may be deployed on land, where the deployment includes indoors, outdoors, handheld, wearable, or vehicle-mounted deployment; or may be deployed on a water surface (for example, on a ship); or may be deployed in the air (for example, on an airplane, a balloon, and a satellite). The terminal device may be a tag (Tag), a mobile phone (mobile phone), a tablet computer (Pad), a computer that has a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a vehicle-mounted device, a terminal in industrial control, a UE unit, a UE station, a mobile station, a remote station, a remote terminal, a mobile device, a UE terminal, a wireless communication device, a UE proxy, a UE apparatus, or the like. The terminal device may be fixed or mobile. It may be understood that all or a part of functions of the terminal device in this application may alternatively be implemented by using a software function running on hardware, or may be implemented by using an instantiated virtualization function on a platform (for example, a cloud platform). The terminal device in this application may be a terminal used in a 5th generation (5th generation, 5G) network, or may be a terminal used in a 6th generation (6th generation, 6G) network. This is not limited in this application.

### (2) Network device

The network device may include an access network device and a core network device.

The access network device is a device that provides a wireless communication function for the terminal device. The access network device includes but is not limited to a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmitting point (transmitting point, TP), a mobile switching center, and the like.

The access network device and the terminal device may be at fixed locations, or may be movable. The access network device and the terminal device may be deployed terrestrially, including indoors or outdoors, or may be handheld or vehicle-mounted; may be deployed on a water surface; or may be deployed on a plane, a balloon, or a man-made satellite in the air. Application scenarios of the access network device and the terminal device are not limited in embodiments of this application.

In some possible network structures, the access network device may include one or more central units (central units, CUs) and one or more distributed units (distributed units, DUs). A plurality of DUs may be centrally controlled by one CU. This architecture may be referred to as a CU-DU split architecture. For example, an interface between the CU and the DU may be referred to as an F1 interface. A control plane (control panel, CP) interface may be an F1-C interface, and a user plane (user panel, UP) interface may be an F1-U interface.

The core network device includes a part or all of the following network elements: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a tag management function (tag management function, TMF) network element, a session management function (session management function, SMF) network element, a user plane function (user plane function, UPF) network element, and a network repository function (network repository function, NRF) network element.

The unified data management network element is a control plane network element provided by an operator, and is responsible for storing information such as a subscription permanent identifier (subscriber permanent identifier, SUPI), a credential (credential), a security context (security context), and subscription data of a subscriber in an operator network. The information stored in the unified data management network element may be used for authentication and authorization for accessing the operator network by the terminal device. The subscriber in the operator network may be specifically a user using a service provided by the operator network, for example, a user using a SIM card of China Telecom, or a user using a SIM card of China Mobile. The SUPI of the subscriber may be a number of the SIM card, or the like. The credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the user. The subscription data of the subscriber may be a supporting service of the SIM card, for example, a traffic package or a used network of the SIM card. It should be noted that the permanent identifier, the credential, the security context, the authentication cookie (cookie), and the token are equivalent to information related to authentication and authorization, and are not limited or distinguished between each other for ease of description in this application document. Unless otherwise specified, the security context is used as an example for description in embodiments of this application. However, embodiments of this application are also applicable to authentication and/or authorization information described in another manner. In 5G, the data management network element may be the UDM network element. In future communication, for example, in 6G, the data management network element may still be the UDM network element, or may have another name. This is not limited in this application.

The unified data repository network element is a control plane network element provided by the operator network, and includes a function of accessing data of types such as subscription data, policy data, and application data. In 5G, the unified data repository network element may be the UDR network element. In future communication, for example, in 6G, the unified data repository network element may still be the UDR network element, or may have another name. This is not limited in this application.

The access and mobility management function network element is a control plane network element provided by the operator network, and is responsible for access control and mobility management for accessing the operator network by the terminal device, for example, including functions such as mobility status management, allocation of a temporary user identity, and user authentication and authorization. In 5G, the access and mobility management function network element may be the AMF network element. In future communication, for example, in 6th generation (6th generation, 6G), the access and mobility management function network element may still be the AMF network element, or may have another name. This is not limited in this application.

The user plane function network element is a gateway provided by the operator, and is a gateway for communication between the operator network and the DN. The user plane function network element includes functions related to a user plane, for example, data packet routing and transmission, packet detection, service usage reporting, quality of service (Quality of Service, QoS) processing, lawful interception, uplink packet detection, and downlink data packet storage. In 5G, the user plane network element may be the UPF network element. In future communication, for example, in 6G, the user plane network element may still be the UPF network element, or may have another name. This is not limited in this application.

The following describes, with reference to the accompanying drawings, the solutions provided in this application.

In a current network, a user may log in to a to-be-accessed application by using a user identifier, to access the to-be-accessed application and use a part of services in the to-be-accessed application. However, in an actual application scenario, when the user accesses the to-be-accessed application or uses the part of services in the to-be-accessed application, there is usually an attribute association requirement, that is, the to-be-accessed application further needs to obtain attribute information of the user.

To prevent the user from repeatedly providing the same attribute information for different applications, this application provides an implementation method. To be specific, a network device obtains and stores persona identifiers for different entities to access different applications. The entity may also be referred to as a digital identity entity, and the entity may be any one of a person, a machine (machine), a digital entity (digital person), or an intelligent entity (intelligent agent). The to-be-accessed application may obtain, from the persona identifiers that are of the different entities and stored in the network device, related attribute information of an entity that currently accesses the to-be-accessed application, and the entity that accesses the to-be-accessed application does not need to fill in the attribute information repeatedly.

In embodiments of this application, before obtaining a persona identifier of an entity, the network device may first determine a root identifier of the entity, and then may generate at least one persona identifier for the root identifier of the entity. The following first describes the root identifier of the entity in detail.

(1) Root identifier: Each entity has a corresponding root identifier. The root identifier may be used as a unique identifier identifying the entity. When the entity accesses different applications, the corresponding root identifier does not change. The root identifier of the entity may be determined by a terminal device, and the terminal device sends the root identifier to the network device for storage; or a network device may determine the root identifier of the entity.

For different types of terminal devices, manners of determining the root identifiers are different. Terminal devices may be classified into two types: a terminal device that includes a subscriber identity module (subscriber identity module, SIM) card and a terminal device that does not include a SIM card. For example, the terminal device that includes the SIM card may be a device like a mobile phone, and the terminal device that does not include the SIM card may be a device like a watch, a tablet, or a computer.

When the terminal device includes the SIM card, the root identifier may be determined based on an identifier of the SIM card. When the terminal device does not include the SIM card, the root identifier may be determined based on a device identifier of the terminal device. The device identifier of the terminal device may be a hardware identifier of the terminal device, or may be a software identifier of the terminal device. This is not limited herein. For example, the software identifier of the terminal device may be determined based on a software development kit (software development kit, SDK) installed on the terminal device.

The following describes, with reference to a specific embodiment, how the network device determines the root identifier corresponding to the entity. A method for the terminal device to determine the root identifier corresponding to the entity is similar to the manner for the network device to determine the root identifier corresponding to the entity. Details are not described again.

In this embodiment of this application, it is assumed that a first application is installed on the terminal device, and the first application is a to-be-accessed application. Before the entity accesses the first application, the root identifier corresponding to the entity may be first determined. An embodiment of this application provides a communication method, to determine a root identifier corresponding to an entity. The method may be performed by a first network device and a terminal device through interaction. The first network device may be a network element located at a network operator, for example, an identity management (identity management, IdM) network element, or another network element having an identity management function. This is not limited herein. The communication method provided in this embodiment of this application may include the following steps shown in FIG. 2.

S201: The terminal device sends a tenth message to the first network device. Correspondingly, the first network device receives the tenth message from the terminal device.

In this embodiment of this application, the tenth message may be used to request the root identifier of the entity.

For different types of terminal devices, content included in the tenth message may include the following two possible implementations.

In a first possible implementation, when the terminal device includes a SIM card, the tenth message may include an identifier of the SIM card.

When the terminal device includes the SIM card, the first network device may determine the root identifier of the entity based on the identifier of the SIM card in the following two possible implementations.

Implementation A: After receiving the tenth message, the first network device may determine the root identifier of the entity based on a SUPI corresponding to the identifier of the SIM card.

In a possible implementation, the first network device may directly use, as the root identifier, the SUPI corresponding to the identifier of the SIM card, or the first network device may encode the SUPI corresponding to the identifier of the SIM card, and use an encoded SUPI as the root identifier. It should be understood that the SUPI or the encoded SUPI is a unique identifier used to distinguish between different entities.

Implementation B: After receiving the tenth message, the first network device may determine the root identifier of the entity based on the identifier of the SIM card.

In a possible implementation, the first network device may generate the root identifier of the entity for the identifier of the SIM card. The root identifier is a unique identifier used to distinguish between different entities. In embodiments of this application, the root identifier may be in a network access identifier (network access identifier, NAI) format.

Optionally, a specific form of the NAI format may be username@realm, where realm may be a public land mobile network identifier (public land mobile network ID, PLMN ID), and the PLMN ID may be determined based on a mobile country code (mobile country code, MCC) and a mobile network code (mobile network code, MNC), for example, PLMN ID=MCC+MNC. Different root identifiers correspond to different username values.

In embodiments of this application, the entity may obtain the SIM card from a network operator through subscription. During the subscription, the entity may send, to the network operator, information related to the entity. The network operator uses, as first information, the information related to the entity, and associates the identifier of the SIM card with the first information. The first information may identify attribute information of the entity.

The first information includes at least one of the following: identity information, status information, subscription information, service information, and the like. After obtaining the first information of the entity, the first network device uses all of the identity information, the status information, the subscription information, and the service information in the first information as the attribute information of the entity.

The foregoing four types of attribute information are described in detail as follows:
(1) The identity information may be identity information corresponding to a digital identity entity, for example, identity information of an individual user or identity information of an enterprise legal person. When the digital identity entity is the individual user, the identity information of the individual user includes information such as a user identity card number, a user name, and a user address. When the digital identity entity is the enterprise legal person, the identity information of the enterprise legal person includes information such as a unified social credit code, an enterprise name, a registered address of an enterprise, and a name of the enterprise legal person.
(2) The status information may include information such as location information corresponding to the digital identity entity, a reachability status recorded in a network, and an identifier of a network element that currently provides a service.
(3) The subscription information may include information about a service subscribed to from the network operator, including but not limited to account data and subscription data. The subscription data is information such as a list of subscribed operator services and a payment manner.
(4) The service information may include service authorization information and access control information. The service authorization information is used to record authorization information received by the digital identity entity and/or authorization information provided by the digital identity entity for another digital identity entity. The authorization information includes but is not limited to authorization permission, an authorization validity period, and authorization content. The access control information is used to record a type of an application and/or a service that the digital identity entity is allowed to access.

An attribute identifier may include at least one of the following: an "identity attribute", a "status attribute", a "subscription attribute", and a "service attribute". The obtained identity information is used as attribute information corresponding to the identity attribute, the status information is used as attribute information corresponding to the status attribute, the subscription information is used as attribute information corresponding to the subscription attribute, and the service information is used as attribute information corresponding to the service attribute.

In a second possible implementation, when the terminal device does not include a SIM card, the tenth message may include a device identifier of the terminal device.

Optionally, when the terminal device does not include the SIM card, before the terminal device sends the tenth message to the first network device, the terminal device may establish a transport layer security (transport layer security, TLS) connection to the first network device, to ensure integrity and privacy of a transmitted message.

When the terminal device does not include the SIM card, the first network device may determine the root identifier of the entity in Implementation C.

Implementation C: After receiving the tenth message, the first network device may generate the root identifier of the entity based on the device identifier of the terminal device.

In a possible implementation, the first network device may directly generate, for the device identifier of the terminal device, the root identifier uniquely identifying the entity. The root identifier may be in an NAI format.

Optionally, the tenth message may further include second information of the entity, and the second information may identify attribute information of the entity. The second information may include identity information. The identity information included in the second information may be identity information corresponding to the entity.

Optionally, for the tenth message in Implementation C, the tenth message may further include third information of the entity, and the third information is used to verify the entity.

When the entity is an individual user, the third information includes an identity card photo or a face photo of the user. The first network device may send an identity card number of the user, a user name, a user address, and the identity card photo or the face photo of the user to a first identity issuing/verification authority for verification. The following uses an example in which the first identity issuing/verification authority is the First Research Institute of the Ministry of Public Security for discussion. If the foregoing information has been verified by the First Research Institute of the Ministry of Public Security, the first network device may generate the root identifier of the entity based on the device identifier of the terminal device.

When the entity is an enterprise legal person, the third information includes a business license of an enterprise. The first network device may send a unified social credit code, an enterprise name, a registered address of the enterprise, a name of the enterprise legal person, and the business license of the enterprise to a second identity issuing/verification authority. The following uses an example in which the second identity issuing/verification authority is the Administration for Industry and Commerce for discussion. If the foregoing information has been verified by the Administration for Industry and Commerce, the first network device may generate the root identifier of the entity based on the device identifier of the terminal device.

In Implementation C, after the terminal device accesses the first network device, the first network device may further determine status information, subscription information, service information, and the like corresponding to the entity. The first network device may use all of the identity information, the status information, the subscription information, and the service information as the attribute information.

In this embodiment of this application, the first network device may associatively store the root identifier of the entity and at least one piece of attribute information.

S202: The first network device sends the root identifier to the terminal device. Correspondingly, the terminal device receives the root identifier from the first network device.

In this embodiment of this application, after obtaining the root identifier of the entity, the terminal device may store the root identifier in the terminal device.

The foregoing method provides a method for conveniently determining the root identifier of the entity.

In a possible implementation, after determining the root identifier of the entity, the first network device may further determine a digital authentication credential corresponding to the root identifier. Herein, the digital authentication credential corresponding to the root identifier is referred to as a second authentication credential. The second authentication credential is a digital authentication credential used to verify the root identifier. The second authentication credential may be used to verify validity of the root identifier.

In a possible implementation, after receiving the root identifier of the entity, the terminal device may also determine the second authentication credential corresponding to the root identifier, and send the second authentication credential to the first network device.

With reference to the steps of generating the root identifier by the first network device in FIG. 2, the following describes in detail how the first network device generates the second authentication credential for the root identifier of the entity.

After generating the root identifier of the entity in any one of Implementation A to Implementation C, the first network device may generate the second authentication credential for the root identifier, where the second authentication credential may be used to verify the root identifier. It should be understood that the second authentication credential may be an authentication vector, a preset certificate, a preset private key, or the like. This is not limited herein.

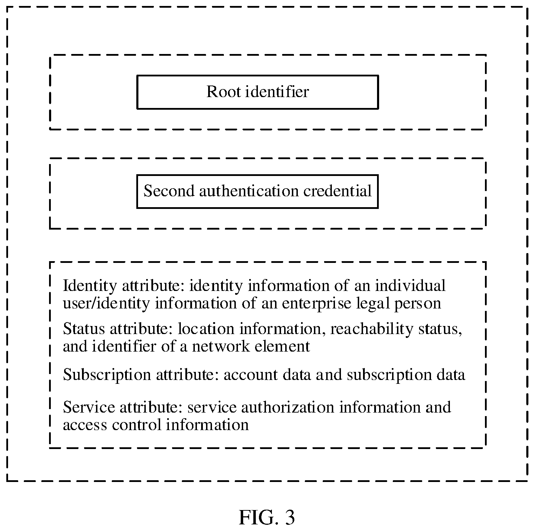

In this embodiment of this application, the first network device may associatively store the root identifier of the entity, the second authentication credential, and the at least one piece of attribute information, as shown in FIG. 3.

After the first network device generates the second authentication credential, the first network device may send the second authentication credential to the terminal device. Correspondingly, after obtaining the second authentication credential, the terminal device may associate the root identifier with the second authentication credential, and store the root identifier and the second authentication credential in the terminal device.

(2) Persona identifier: One entity corresponds to at least one persona identifier. When the entity accesses different applications, different persona identifiers can be used. The persona identifier may be determined by a terminal device, and the terminal device sends the persona identifier to a network device for storage; or a network device may determine at least one persona identifier of the entity. For example, for a same entity, the entity may use a persona identifier 1 to access an application A, and may use a persona identifier 2 to access an application B. Different persona identifiers of the same entity may be determined based on a root identifier of the entity according to different algorithms. Certainly, the entity may alternatively freely determine persona identifiers for accessing different applications.

The following describes, with reference to a specific embodiment, how the network device determines the persona identifier corresponding to the entity. A method for the terminal device to determine the persona identifier corresponding to the entity is similar to the manner for the network device to determine the persona identifier corresponding to the entity. Details are not described again.

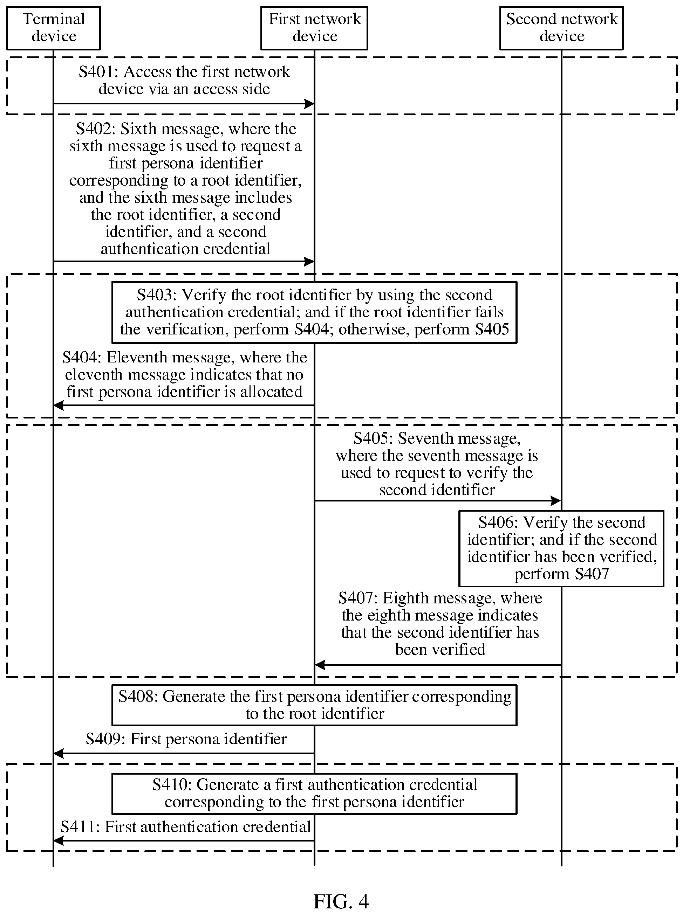

In this embodiment of this application, it is assumed that a first application is installed on the terminal device, and the first application is a to-be-accessed application. Before the entity accesses the first application, a root identifier of the entity may be determined according to the communication method shown in FIG. 2. After the root identifier of the entity is determined, at least one persona identifier corresponding to the entity may be further determined. An embodiment of this application provides a communication method, to determine a first persona identifier in at least one persona identifier corresponding to an entity. As shown in FIG. 4, the communication method may be performed by a first network device, a terminal device, and a second network device through interaction. The second network device may be an identity providing network element, or another network element having an identity providing function. This is not limited herein. A sequence of steps in FIG. 4 is merely an example. In actual application, an execution sequence of the steps in FIG. 4 may be adjusted. The communication method may include the following steps shown in FIG. 4.

Optionally, the method may include S401.

S401: The terminal device accesses the first network device via an access side.

For different types of terminal devices, the terminal device may access the first network device in the following two possible implementations.

In a first possible implementation, when the terminal device includes a SIM card, the terminal device may access the first network device according to the third generation partnership project (third generation partnership project, 3GPP)/non-third generation partnership project (nonthird generation partnership project, Non-3GPP), and establish a trusted connection to the first network device.

In a second possible implementation, when the terminal device does not include a SIM card, because the terminal device does not have a non-access stratum (non-access stratum, NAS) capability, the terminal device may access the first network device in a manner like a mobile hotspot (Wi-Fi)/a wired manner, and establish a trusted connection to the first network device via a node such as a trusted wireless local area network interworking function (trusted WLAN interworking function, TWIF)/network exposure function (network exposure function, NEF)/non-3GPP interworking function (Non-3GPP interworking function, N3IWF).

S402: The terminal device sends a sixth message to the first network device. Correspondingly, the first network device receives the sixth message from the terminal device.

In this embodiment of this application, the sixth message may include a root identifier of the entity, the root identifier uniquely identifies the entity, and the sixth message is used to request the first persona identifier corresponding to the root identifier. Optionally, the sixth message may further include a second authentication credential, and the second authentication credential may be used to verify the root identifier.

Optionally, the sixth message may further include a second identifier, and the second identifier identifies identity information of the entity. In this embodiment of this application, the second identifier includes the following three possible cases:
Case 1: When the entity is an individual user, the second identifier may include an identity of the entity. For example, the identity may be a user identity card number or the like.
Case 2: When the entity is an individual user, the second identifier may include an identity of the entity and an identifier of a target identity providing node. For example, the identity may be a user identity card number, and the target identity providing node may be the First Research Institute of the Ministry of Public Security. Alternatively, the identity may be an employee number, and the target identity providing node may be an enterprise. Alternatively, the identity may be a user identity card number, and the target identity providing node may be an enterprise.

In addition, the second identifier in Case 2 may alternatively be an email account, and the identity of the entity and the identifier of the target identity providing node may be determined based on the email account. For example, the email account is zhangsan@idip.com, where zhangsan is the identity, and idip is the identifier of the target identity providing node.

Case 3: When the entity is an enterprise legal person, the second identifier may include an identity of the entity. For example, the identity may be a unified social credit code of an enterprise or the like.

Case 4: When the entity is an enterprise legal person, the second identifier may include an identity of the entity and an identifier of a target identity providing node. For example, the identity may be a unified social credit code of an enterprise, and the target identity providing node may be the Administration for Industry and Commerce.

Optionally, the sixth message may further include an identifier of at least one application or a type of at least one service. For example, the at least one application may be an application A, an application B, or the like. The type of the at least one service may be a shopping type, a video type, or the like.

Optionally, the sixth message may further include other attribute information of the entity, for example, social attribute information. When the entity is the individual user, the social attribute information may include an occupation of the user, an industry type to which the occupation of the user belongs, and the like. This is not limited herein. When the entity is the enterprise legal person, the social attribute information may include an industry type to which the enterprise belongs, an enterprise revenue status, and the like. This is not limited herein.

Optionally, the method may further include S403 and S404.

S403: The first network device verifies the root identifier by using the second authentication credential; and if the root identifier fails the verification, the first network device performs S404; or if the root identifier has been verified, the first network device performs S405.

S404: The first network device sends an eleventh message to the terminal device. Correspondingly, the terminal device receives the eleventh message from the first network device. Then, the process ends, to be specific, S405 to S409 are no longer performed.

In this embodiment of this application, the eleventh message indicates that no first persona identifier is allocated. Optionally, the eleventh message may further include a reason why no first persona identifier is allocated, to be specific, "the root identifier fails the verification".

Optionally, the method may further include S405 to S407.

S405: The first network device sends a seventh message to the second network device. Correspondingly, the second network device receives the seventh message from the first network device.

In this embodiment of this application, the seventh message is used to request to verify the second identifier, and the seventh message may include the second identifier.

S406: The second network device verifies the second identifier; and if the second identifier has been verified, the second network device performs S407.

S407: The second network device sends an eighth message to the first network device. Correspondingly, the first network device receives the eighth message from the second network device.

In a possible implementation, when the second identifier has been verified by the second network device or fails the verification of the second network device, the second network device may send the eighth message to the first network device. When the second identifier has been verified, the eighth message may indicate that the second identifier has been verified; or when the second identifier fails the verification, the eighth message may indicate that the second identifier fails the verification.

In a possible implementation, the eighth message includes a first determining identifier. When the first determining identifier is true (true), the eighth message indicates that the second identifier has been verified. When the first determining identifier is false (false), the eighth message indicates that the second identifier fails the verification.

It should be understood that there is no execution sequence between S403 and S404, and S405 to S407. The communication method shown in FIG. 4 may include S403 and S404, or S405 to S407, or include S403, S404, and S405 to S407.

S408: When the eighth message indicates that the second identifier has been verified, the first network device generates the first persona identifier corresponding to the root identifier.

S409: The first network device sends the first persona identifier to the terminal device. Correspondingly, the terminal device receives the first persona identifier from the first network device.

Optionally, after determining the first persona identifier of the entity, the first network device may further determine a digital authentication credential corresponding to the first persona identifier. Herein, the digital authentication credential corresponding to the first persona identifier is referred to as a first authentication credential. The first authentication credential is a digital authentication credential used to verify the first persona identifier. The first authentication credential may be used to verify validity of the first persona identifier. The first network device may generate the first authentication credential in S410, and send the first authentication credential to the terminal device in S411.

S410: The first network device generates the first authentication credential corresponding to the first persona identifier. The first authentication credential is used to verify the first persona identifier. It should be understood that the first authentication credential may be an authentication vector, a preset certificate, a preset private key, or the like. This is not limited herein.

Optionally, when the sixth message includes the other attribute information, the first network device may use all of the identity information, status information, subscription information, service information, and the other attribute information in the sixth message as attribute information of the entity corresponding to the first persona identifier.

Optionally, when the sixth message may further include the identifier of the at least one application or the type of the at least one service, the identifier of the at least one application or the type of the at least one service may be added to access control information in the service information corresponding to the first persona identifier.

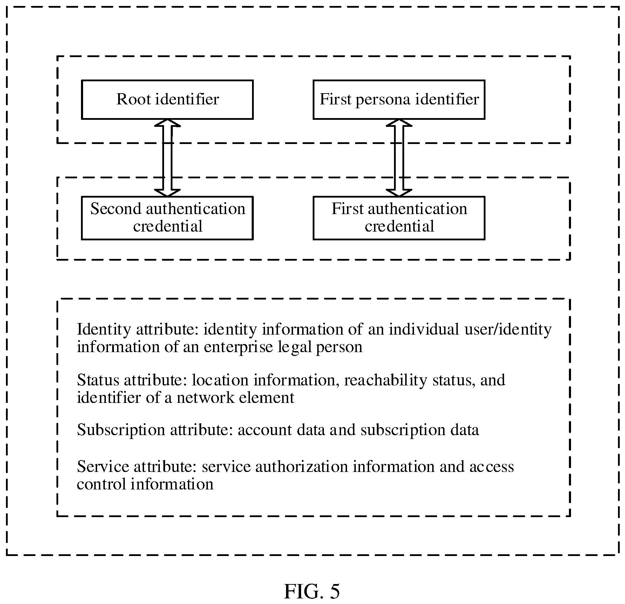

In this embodiment of this application, the first network device may associate the root identifier of the entity with the second authentication credential, associate the first persona identifier of the entity with the first authentication credential, associate the first persona identifier with the attribute information corresponding to the first persona identifier, and store the root identifier, the second authentication credential, the first persona identifier, the first authentication credential, and the attribute information corresponding to the first persona identifier, as shown in FIG. 5.

S411: The first network device sends the first authentication credential to the terminal device. Correspondingly, the terminal device receives the first authentication credential from the first network device.

In this embodiment of this application, after obtaining the first persona identifier and the first authentication credential, the terminal device may associate the first persona identifier with the first authentication credential, and store the first persona identifier and the first authentication credential in the terminal device. In addition, the root identifier is associated with the first persona identifier. In this case, the terminal device stores the root identifier, the second authentication credential, the first persona identifier, and the first authentication credential.

It should be understood that, in the foregoing method, S408 and S410 may be performed in combination. To be specific, the first network device may determine the first persona identifier and the first authentication credential at the same time. In the foregoing method, S409 and S411 may also be performed in combination. In other words, the first network device sends the first persona identifier and the first authentication credential to the terminal device at the same time.

In the foregoing method, the persona identifier of the entity may be conveniently determined, and the attribute information corresponding to the persona identifier of the entity may be further determined.

Optionally, according to the communication method shown in FIG. 4, after the terminal device obtains the first persona identifier of the entity, the terminal device may further send a revocation request to the first network device, where the revocation request is used to request to revoke the first persona identifier, and the revocation request includes the first persona identifier of the entity. After obtaining the first persona identifier of the entity, the first network device deletes the first persona identifier and the attribute information corresponding to the first persona identifier, and sends a revocation response to the terminal device, where the revocation response identifies that the revocation of the first persona identifier is completed.

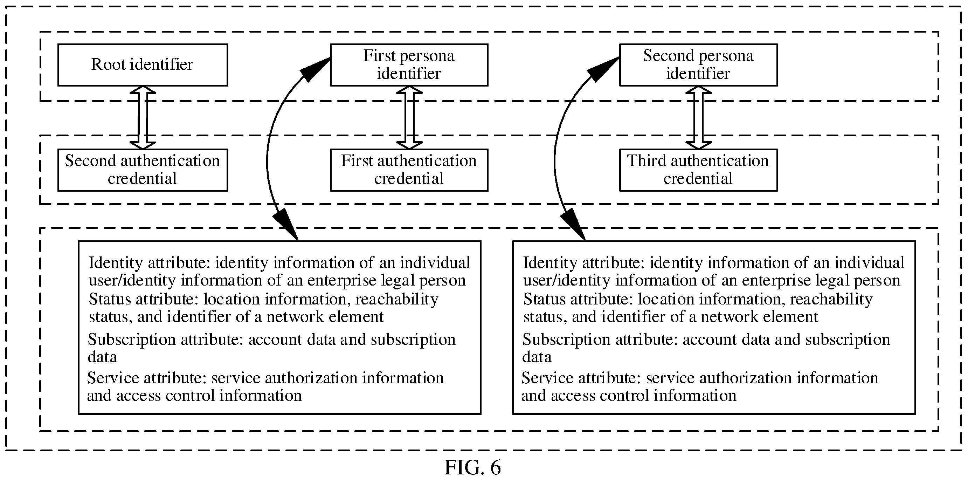

The following describes in detail a relationship between the root identifier of the entity and two persona identifiers with reference to specific embodiments. As shown in FIG. 6, the root identifier corresponds to the two persona identifiers, namely, the first persona identifier and a second persona identifier. The second authentication credential is used to verify the root identifier, the first authentication credential is used to verify the first persona identifier, a third authentication credential is a digital authentication credential used to verify the second persona identifier, the third authentication credential is used to verify the second persona identifier, and the first persona identifier and the second persona identifier may correspond to different attribute information.

Optionally, for the four possible cases included in the second identifier, S405 to S407 are described in detail.

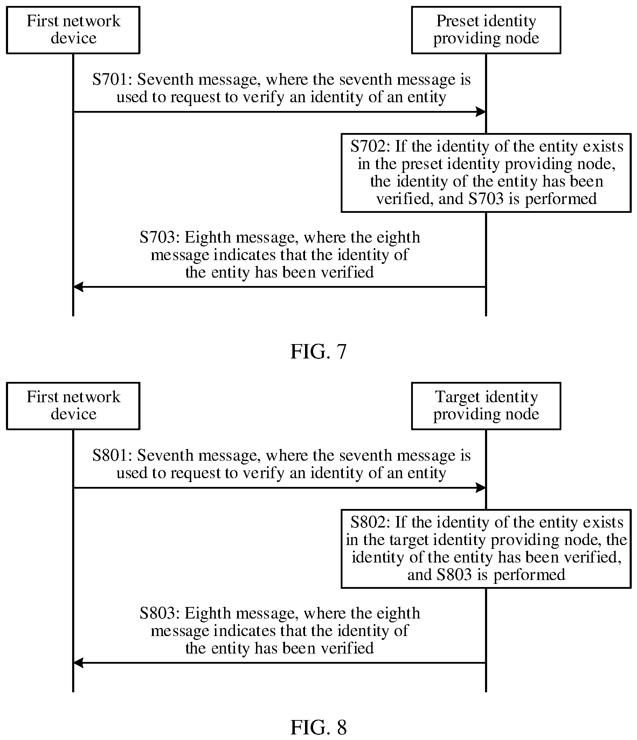

Case 1: When the entity is the individual user, the second identifier includes the identity of the entity, and the second network device is a preset identity providing node. Interaction between the first network device and the second network device is shown in FIG. 7.

S701: The first network device sends the seventh message to the preset identity providing node. Correspondingly, the preset identity providing node receives the seventh message from the first network device.

In this embodiment of this application, the seventh message may be used to request to verify the identity of the entity. The seventh message includes the identity of the entity. The identity may be the user identity card number or the like. The preset identity providing node may be a first identity issuing/verification authority, for example, the First Research Institute of the Ministry of Public Security.

In a possible implementation, the first network device sends the user identity card number to the First Research Institute of the Ministry of Public Security, and the First Research Institute of the Ministry of Public Security verifies the user identity card number.

S702: If the identity of the entity exists in the preset identity providing node, the identity of the entity has been verified, and S703 is performed.

S703: The preset identity providing node sends the eighth message to the first network device. Correspondingly, the first network device receives the eighth message from the preset identity providing node.

In this embodiment of this application, the eighth message may indicate that the identity of the entity has been verified.

In the foregoing method, when the entity is the individual user, a method for conveniently verifying the identity of the entity is provided.

Case 2: When the entity is the individual user, the second identifier includes the identity of the entity and the identifier of the target identity providing node, and the second network device is the target identity providing node. Interaction between the first network device and the second network device is shown in FIG. 8.

S801: The first network device sends the seventh message to the target identity providing node based on the identifier of the target identity providing node. Correspondingly, the target identity providing node receives the seventh message from the first network device.

In this embodiment of this application, the seventh message may be used to request to verify the identity of the entity. The seventh message includes the identity of the entity. The identity may be the user identity card number, and the target identity providing node may be the First Research Institute of the Ministry of Public Security. Alternatively, the identity may be the employee number, and the target identity providing node may be the enterprise. Alternatively, the identity may be the user identity card number, and the target identity providing node may be the enterprise.

In a possible implementation, the first network device sends the user identity card number to the First Research Institute of the Ministry of Public Security, and the First Research Institute of the Ministry of Public Security verifies the user identity card number.

In a possible implementation, the first network device sends the employee number to the enterprise, and the enterprise verifies the employee number.

In a possible implementation, the first network device sends the user identity card number to the enterprise, and the enterprise verifies the user identity card number.

Before performing S801, the first network device may generate and store a second mapping relationship. The second mapping relationship is generated in the following three manners.

In a first manner, the first network device receives a ninth message from the identity providing node, where the ninth message includes the identifier of the identity providing node and a verification address corresponding to the identifier of the identity providing node. The first network device adds, to the second mapping relationship, the identifier of the identity providing node and the verification address corresponding to the identifier of the identity providing node. The generated second mapping relationship includes identifiers of a plurality of identity providing nodes and a respective verification address corresponding to each of the identifiers of the plurality of identity providing nodes. The identifiers of the plurality of identity providing nodes in the second mapping relationship include the identifier of the target identity providing node.

In a second manner, another device generates the second mapping relationship in the first manner, and sends the second mapping relationship to the first network device.

In a third manner, the identifier of the identity providing node and a verification address corresponding to the identifier of the identity providing node are manually added to the second mapping relationship.

In a possible implementation, the first network device may determine, based on the second mapping relationship, the verification address corresponding to the identifier of the target identity providing node, and the first network device sends the seventh message to the target identity providing node by using the verification address corresponding to the identifier of the target identity providing node.

S802: If the identity of the entity exists in the target identity providing node, the identity of the entity has been verified, and S803 is performed.

S803: The target identity providing node sends the eighth message to the first network device. Correspondingly, the first network device receives the eighth message from the target identity providing node.

In this embodiment of this application, the eighth message may indicate that the identity of the entity has been verified.

In the foregoing method, when the entity is the individual user, a method for conveniently verifying the identity of the entity is provided.

Case 3: When the entity is the enterprise legal person, the second identifier includes the identity of the entity, and the second network device is a preset identity providing node. For interaction between the first network device and the second network device, refer to FIG. 7. In Case 3, the identity may be the unified social credit code of the enterprise, and the preset identity providing node may be a second identity issuing/verification authority, for example, the Administration for Industry and Commerce.

In a possible implementation, the first network device sends the unified social credit code of the enterprise to the Administration for Industry and Commerce, and the Administration for Industry and Commerce verifies the unified social credit code of the enterprise.

Case 4: When the entity is the enterprise legal person, the second identifier includes the identity of the entity and the identifier of the target identity providing node, and the second network device is the target identity providing node. For interaction between the first network device and the second network device, refer to FIG. 8. In Case 4, the identity may be the unified social credit code of the enterprise, and the target identity providing node may be the Administration for Industry and Commerce.

In the foregoing method, when the entity is the enterprise legal person, a method for conveniently verifying the identity of the entity is provided.

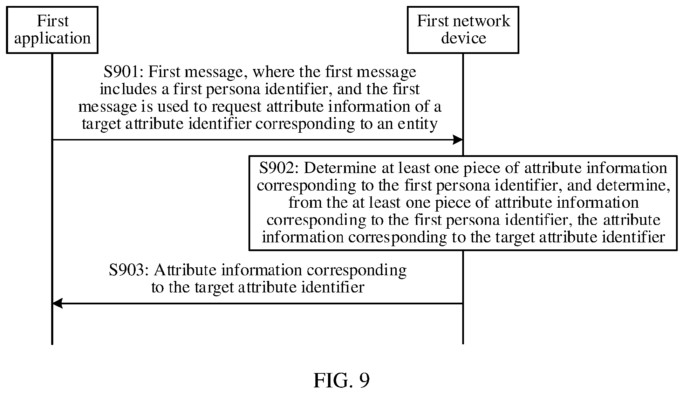

In this embodiment of this application, it is assumed that a first application is installed on the terminal device. The first application is a to-be-accessed application. Before the entity accesses the first application, the root identifier of the entity may be determined according to the communication method shown in FIG. 2, and the first persona identifier of the entity may be determined according to the communication method shown in FIG. 4. After the root identifier and the first persona identifier of the entity are determined, an embodiment of this application further provides a communication method. In the communication method, after the entity logs in to the first application, the first network device may provide the attribute information of the entity for the first application. The communication method may be performed by the first application on the terminal device and the first network device through interaction. The communication method may include the following steps shown in FIG. 9.

S901: The first application sends a first message to the first network device. Correspondingly, the first network device receives the first message from the first application.

In this embodiment of this application, the first message includes the first persona identifier, and the first persona identifier identifies the entity that currently accesses the first application.

The first message may further include a target attribute identifier, and the first message is used to request attribute information of the target attribute identifier corresponding to the entity. The target attribute identifier may be at least one of an "identity attribute", a "status attribute", a "subscription attribute", and a "service attribute". Certainly, if the first application and the first network device agree on the to-be-requested attribute information of the entity in advance, the first message may alternatively not include the target attribute identifier.

S902: The first network device determines at least one piece of attribute information corresponding to the first persona identifier, and determines, from the at least one piece of attribute information corresponding to the first persona identifier, the attribute information corresponding to the target attribute identifier.

As described above, the first network device may prestore the first persona identifier of the entity, an association relationship between the first persona identifier and the at least one attribute identifier, and respective attribute information corresponding to each of the at least one attribute identifier. In this case, the first network device may query for, by using the first persona identifier of the entity, the at least one attribute identifier and the respective attribute information corresponding to each attribute identifier, to further find, based on the respective attribute information corresponding to each attribute identifier, the target attribute information corresponding to the target attribute identifier.

S903: The first network device sends, to the first application, the attribute information corresponding to the target attribute identifier. Correspondingly, the first application receives, from the first network device, the attribute information corresponding to the target attribute identifier.

In the foregoing method, the first application may directly obtain, from the first network device, the attribute information related to the entity corresponding to the first persona identifier, and the user does not need to fill in the attribute information in the first application, so that the first application can quickly and efficiently obtain the attribute information of the entity that accesses the first application.

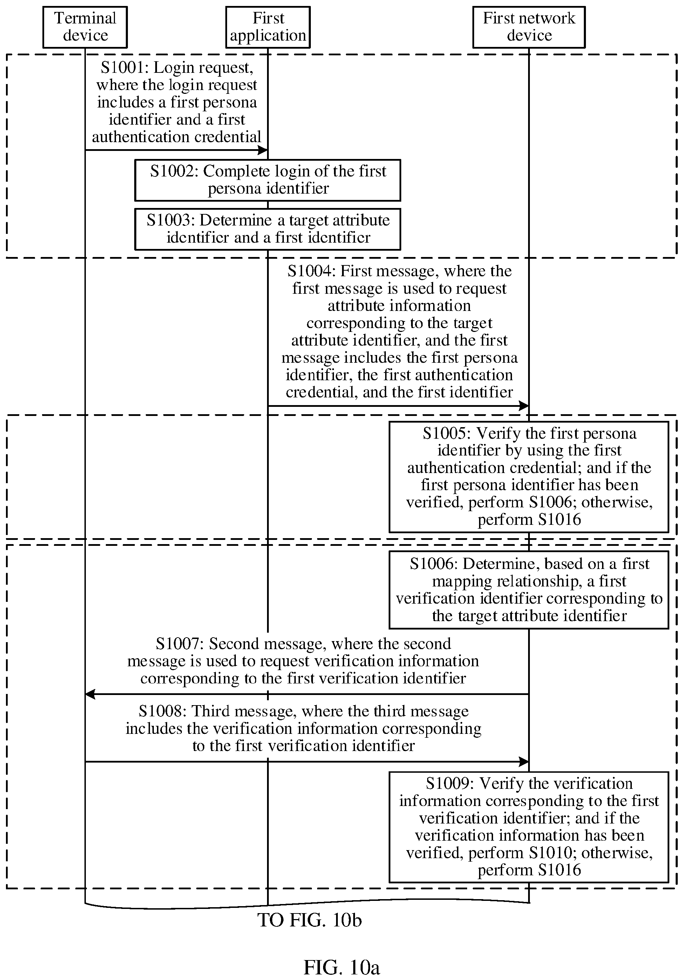

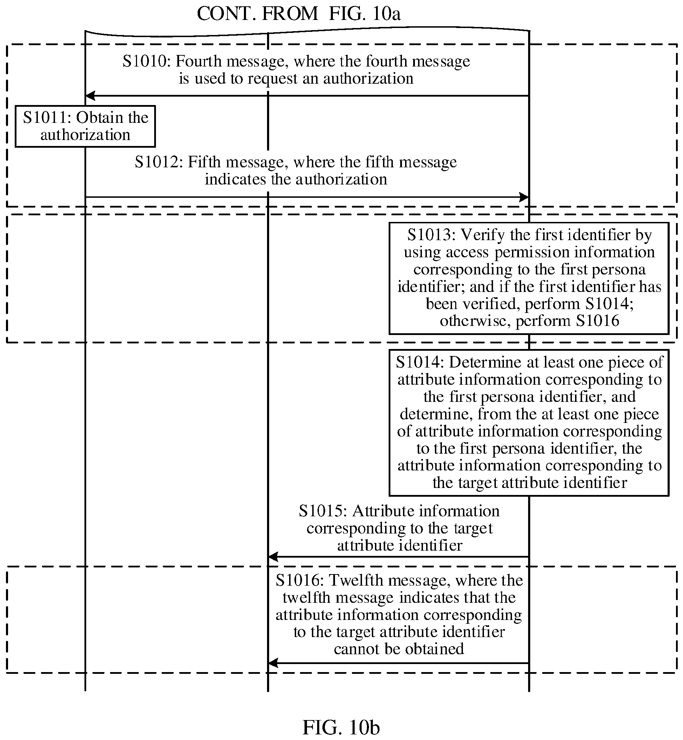

To describe the communication method shown in FIG. 9 in detail, an embodiment of this application further provides a communication method. As shown in FIG. 10a and FIG. 10b, the communication method may be performed by a first application on a terminal device and a first network device through interaction. A sequence of steps in FIG. 10a and FIG. 10b is merely an example. In actual application, an execution sequence of the steps in FIG. 10a and FIG. 10b may be adjusted. The communication method may include the following steps shown in FIG. 10a and FIG. 10b.

Optionally, the method may include S1001 to S1003.

S1001: The terminal device sends a login request to the first application. Correspondingly, the first application receives the login request from the terminal device.

In this embodiment of this application, an entity sends a login request to the first application via a terminal, where the login request may include a first persona identifier of the entity. The first persona identifier identifies the entity that accesses the first application.

Optionally, the login request may further include a first authentication credential, and the first authentication credential is used to verify the first persona identifier.

S1002: The first application completes login of the first persona identifier.

In this embodiment of this application, after the first application allows the entity to log in based on the first persona identifier, when a specific service of the first application is accessed by the entity, the first application may need to obtain one or more pieces of attribute information of the entity.

For example, after a user logs in to an application X by using the first persona identifier, the user accesses a service Y in the application X. In this case, the application X may need to obtain one or more pieces of attribute information in a user name, a user phone number, a user address, and the like of the user.

When different services in the first application are accessed by the entity, attribute information that is of the entity and that the first application needs to obtain may be the same or may be different, and may be specifically determined based on different services. For example, attribute information that needs to be obtained and that corresponds to the service Y in the application X may include the user name, the user phone number, the user address, and the like, and attribute information that needs to be obtained and that corresponds to a service Z in the application X may include the user name, the user phone number, the user address, a user identity card number, a user bank card number, and the like.

S1003: The first application determines a target attribute identifier and a first identifier.

In this embodiment of this application, when the first application is accessed by the entity or a service in the first application is accessed by the entity, the first application may determine the target attribute identifier needed by the first application or the accessed service in the first application.

The first application may further determine the first identifier. The first identifier may include an identifier of the first application or an identifier of the accessed service in the first application. The first identifier may identify the first application or a target service in the first application, and the target service is a service that is in the first application and accessed by the entity.

S1004: The first application sends a first message to the first network device. Correspondingly, the first network device receives the first message from the first application.

In this embodiment of this application, the first message includes the first persona identifier, and the first persona identifier identifies the entity that currently accesses the first application.

The first message further includes the target attribute identifier, and the first message is used to request attribute information of the target attribute identifier corresponding to the entity.

Optionally, the first message may further include the first identifier, where the first identifier may identify the first application or the target service in the first application.

The first message may further include the first authentication credential, and the first authentication credential is used to verify the first persona identifier.

Optionally, the method may further include S1005, S1006 to S1009, and S1010 to S1012.

S1005: The first network device verifies the first persona identifier by using the first authentication credential; and if the first persona identifier has been verified, the first network device performs S1006; or if the first persona identifier fails the verification, the first network device performs S1016.

S1006: The first network device determines, based on a first mapping relationship, a first verification identifier corresponding to the target attribute identifier.

In this embodiment of this application, the first network device stores the first mapping relationship, and the first mapping relationship may be preset.

The first mapping relationship includes a plurality of attribute identifiers and a respective first verification identifier corresponding to each of the plurality of attribute identifiers. The plurality of attribute identifiers may include at least one of an "identity attribute", a "status attribute", a "subscription attribute", and a "service attribute". The plurality of attribute identifiers include the target attribute identifier. It may be understood as that the target attribute identifier may be at least one of the "identity attribute", the "status attribute", the "subscription attribute", and the "service attribute".

The first verification identifier may include at least one of the following: a biometric verification identifier and an identity verification identifier. The biometric verification identifier is used to obtain biometric information of the entity, and the identity verification identifier is used to obtain an identity of the entity.

It should be understood that the biometric verification identifier may be a face identifier, a fingerprint identifier, an iris identifier, or the like. This is not limited herein.

For example, the first mapping relationship may be as follows:
<"Identity attribute": biometric verification identifier and identity verification identifier>
<"Status attribute": identity verification identifier>

It can be learned from the foregoing first mapping relationship that a first verification identifier corresponding to the "identity attribute" includes the biometric verification identifier and the identity verification identifier, and a first verification identifier corresponding to the "status attribute" includes the identity verification identifier.

S1007: The first network device sends a second message to the terminal device. Correspondingly, the terminal device receives the second message from the first network device.

In this embodiment of this application, the second message includes the first verification identifier, and the second message is used to request verification information corresponding to the first verification identifier.

After receiving the second message, the terminal device determines the verification information corresponding to the first verification identifier. For different cases of the entity, the determined verification information includes the following two possible cases:
Case 1: When the entity is an individual user, the terminal device may obtain a face photo/fingerprint information/iris information of the user based on the biometric verification identifier in the second message. The terminal device may further obtain, based on the identity verification identifier in the second message, an identity of the user, to be specific, a user identity card number or an employee number.
Case 2: When the entity is an enterprise legal person, the terminal device may obtain a face photo/fingerprint information/iris information of the enterprise legal person based on the biometric verification identifier in the second message. The terminal device may further obtain, based on the identity verification identifier in the second message, an identity of an enterprise, to be specific, a unified social credit code of the enterprise.

It should be understood that the terminal device may obtain the face photo of the user or the enterprise legal person by using a camera apparatus on the terminal device, may obtain the fingerprint information of the user or the enterprise legal person by using a fingerprint collection apparatus on the terminal device, and may obtain the iris information of the user or the enterprise legal person by using an iris collection apparatus on the terminal device.

Optionally, after detecting a face of the user or the enterprise legal person by using the camera apparatus, the terminal device may further perform liveness detection. Details are not described herein.

S1008: The terminal device sends a third message to the first network device. Correspondingly, the first network device receives the third message from the terminal device.

In this embodiment of this application, the third message includes the verification information corresponding to the first verification identifier. The third message is used to request to verify the verification information.

S1009: The first network device verifies the verification information corresponding to the first verification identifier; and if the verification information has been verified, the first network device performs S1010; or if the verification information fails the verification, the first network device performs S1016.

In this embodiment of this application, the first network device sends, to a second network device for verification, the verification information corresponding to the first verification identifier.

When the entity is the individual user, if the verification information includes the user identity card number, the first network device sends the verification information to the First Research Institute of the Ministry of Public Security for verification; or if the verification information includes the employee number or the user identity card number, the first network device sends the verification information to the enterprise for verification.

When the entity is the enterprise legal person, if the verification information includes the unified social credit code of the enterprise, the first network device sends the verification information to the Administration for Industry and Commerce for verification.

S1010: The first network device sends a fourth message to the terminal device. Correspondingly, the terminal device receives the fourth message from the first network device.

In this embodiment of this application, the fourth message is used to request an authorization, and the authorization includes allowing the first application or the target service related to the first identifier to obtain the attribute information corresponding to the target attribute identifier.

S1011: The terminal device obtains the authorization. The terminal device may obtain the authorization from the entity.

In this embodiment of this application, after the terminal device receives the fourth message, an authorization interface is displayed at a display end of the terminal device, where the authorization interface includes two options: "Allow" and "Don't Allow". If a user who uses the terminal device selects the option "Allow", the terminal device may obtain the authorization; or if a user who uses the terminal device selects the option "Don't Allow", the terminal device cannot obtain the authorization.

S1012: The terminal device sends a fifth message to the first network device. Correspondingly, the first network device receives the fifth message from the terminal device.

In this embodiment of this application, the fifth message indicates the authorization.

It should be understood that there is no execution sequence between S1005, S1006 to S1009, and S1010 to S1012. The communication method shown in FIG. 10a and FIG. 10b may include S1005, S1006 to S1009, or S1010 to S1012, or include S1005, S1006 to S1009, and S1010 to S1012.

Optionally, the method may further include S1013.

S1013: The first network device verifies the first identifier by using access permission information corresponding to the first persona identifier; and if the first identifier has been verified, the first network device performs S1014; or if the first identifier fails the verification, the first network device performs S1016.

In this embodiment of this application, the first identifier includes the following two possible cases:

Case 1: When the first identifier identifies the first application, if the access permission information corresponding to the first persona identifier includes the first identifier, the first identifier has been verified; or if the first identifier is not included, the first identifier fails the verification.

Case 2: When the first identifier identifies the target service, the first network device determines a service type of the target service based on the first identifier. If the access permission information corresponding to the first persona identifier includes the service type of the target service, the first identifier has been verified; or if the service type is not included, the first identifier fails the verification.

S1014: The first network device determines at least one piece of attribute information corresponding to the first persona identifier, and determines, from the at least one piece of attribute information corresponding to the first persona identifier, the attribute information corresponding to the target attribute identifier.

S1015: The first network device sends, to the first application, the attribute information corresponding to the target attribute identifier. Then, the process ends, to be specific, S1016 is no longer performed.

Optionally, the method may further include S1016.

S1016: The first network device sends a twelfth message to the first application. Correspondingly, the first application receives the twelfth message from the first network device.

In this embodiment of this application, the twelfth message indicates that the attribute information corresponding to the target attribute identifier cannot be obtained.

In the foregoing method, the first application may directly obtain, from the first network device, the attribute information related to the entity corresponding to the first persona identifier, and the user does not need to fill in the attribute information in the first application, so that the first application can quickly and efficiently obtain the attribute information of the entity that accesses the first application. In addition, because the first persona identifier is used to log in to the first application, the first application can obtain, from the first network device, only the attribute information corresponding to the first persona identifier, but cannot obtain attribute information corresponding to another persona identifier. Therefore, attribute information corresponding to different persona identifiers can be isolated, so that the attribute information corresponding to the different persona identifiers can be effectively managed.

In the foregoing embodiments provided in this application, the methods provided in embodiments of this application are separately described from a perspective of interaction between the devices. To implement the functions in the methods provided in embodiments of this application, the first network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

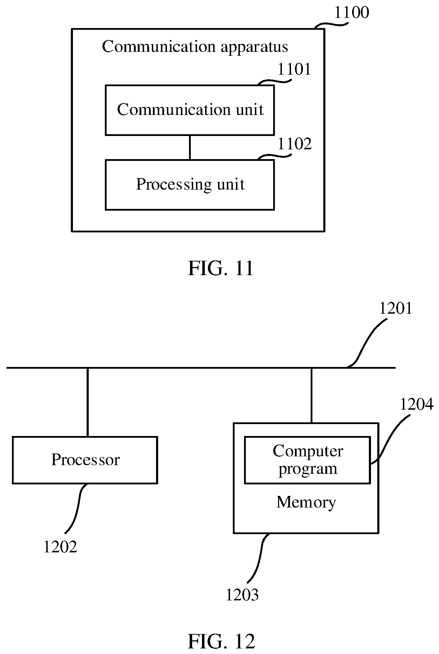

Same as the foregoing concept, as shown in FIG. 11, an embodiment of this application further provides a communication apparatus 1100, configured to implement a function of the first network device or the first application in the foregoing methods. For example, the communication apparatus may be a software module or a chip system. In this embodiment of this application, the chip system may include a chip, or may include a chip and another discrete device. The communication apparatus 1100 may include a communication unit 1101 and a processing unit 1102.

In this embodiment of this application, the communication unit and the processing unit included in the communication apparatus 1100 are respectively configured to perform sending and receiving steps of the first network device or the first application in the foregoing method embodiments. The communication unit and the processing unit may be one unit integrated together, or may be two independent units.

The following describes in detail communication apparatuses provided in embodiments of this application with reference to FIG. 11 and FIG. 12. It should be understood that descriptions of apparatus embodiments correspond to the descriptions of the method embodiments. Therefore, for content that is not described in detail, refer to the method embodiments. For brevity, details are not described herein again.

In an implementation, the communication apparatus 1100 may perform the following functions.

The communication unit 1101 is configured to receive a first message from a first application, where the first message includes a first persona identifier, the first persona identifier identifies an entity that accesses the first application, and the first message is used to request attribute information of a target attribute identifier corresponding to the entity.

The communication unit 1101 is further configured to send, to the first application, the attribute information corresponding to the target attribute identifier, where the attribute information corresponding to the target attribute identifier is determined from at least one piece of attribute information corresponding to the first persona identifier.

In a possible design, the first message further includes a first authentication credential. Before determining the at least one piece of attribute information corresponding to the first persona identifier, the processing unit 1102 is configured to confirm, by using the first authentication credential, that the first persona identifier has been verified.

In a possible design, the first message further includes a first identifier, the first identifier identifies the first application or a target service in the first application, and the target service is a service that is in the first application and accessed by the entity. The processing unit 1102 is further configured to confirm, by using access permission information corresponding to the first persona identifier, that the first identifier has been verified.

In a possible design, the first identifier identifies the first application. The processing unit 1102 is specifically configured to: if the access permission information corresponding to the first persona identifier includes the first identifier, confirm that the first identifier has been verified.

In a possible design, the first identifier identifies the target service. The processing unit 1102 is specifically configured to: determine a service type of the target service based on the first identifier; and if the access permission information corresponding to the first persona identifier includes the service type of the target service, confirm that the first identifier has been verified.

In a possible design, the processing unit 1102 is further configured to: the communication unit 1101 is further configured to: send a second message to a terminal device, where the second message is used to request verification information corresponding to a first verification identifier, the first verification identifier is determined based on a first mapping relationship and the target attribute identifier, the first mapping relationship includes a plurality of attribute identifiers and a respective first verification identifier corresponding to each of the plurality of attribute identifiers, the plurality of attribute identifiers include the target attribute identifier, and the first application is installed on the terminal device. The communication unit 1101 is further configured to receive a third message from the terminal device, where the third message includes the verification information corresponding to the first verification identifier, and the third message is used to request to verify the verification information.

In a possible design, the communication unit 1101 is further configured to send a fourth message to the terminal device, where the fourth message is used to request an authorization, and the authorization includes allowing the first application or the target service related to the first identifier to obtain the attribute information corresponding to the target attribute identifier. The communication unit 1101 is further configured to receive a fifth message from the terminal device, where the fifth message indicates the authorization.

In a possible design, the communication unit 1101 is further configured to receive a sixth message from the terminal device, where the sixth message includes a root identifier of the entity, the root identifier uniquely identifies the entity, and the sixth message is used to request the first persona identifier corresponding to the root identifier. The processing unit 1102 is further configured to generate the first persona identifier corresponding to the root identifier. The communication unit 1101 is further configured to send the first persona identifier to the terminal device.

In a possible design, the sixth message further includes a second authentication credential. The processing unit 1102 is further configured to confirm, by using the second authentication credential, that the root identifier has been verified.

In a possible design, the sixth message further includes a second identifier, and the second identifier identifies identity information of the entity. The communication unit 1101 is further configured to: send a seventh message to a second network device, where the seventh message is used to request to verify the second identifier; and receive an eighth message from the second network device, where the eighth message indicates that the second identifier has been verified.

In a possible design, the second identifier includes an identity of the entity, the second network device is a preset identity providing node, the seventh message is used to request to verify the identity of the entity, and the eighth message indicates that the identity of the entity has been verified.

In a possible design, the second identifier includes an identity of the entity and an identifier of a target identity providing node.

The communication unit 1101 is specifically configured to send the seventh message to the target identity providing node based on the identifier of the target identity providing node, where the seventh message is used to request to verify the identity of the entity.

The communication unit 1101 is specifically configured to receive the eighth message from the target identity providing node, where the eighth message indicates that the identity of the entity has been verified.

In a possible design, the communication unit 1101 is specifically configured to send the seventh message to the target identity providing node by using a verification address corresponding to the identifier of the target identity providing node. The verification address corresponding to the identifier of the target identity providing node is determined based on a second mapping relationship and the identifier of the target identity providing node, the second mapping relationship includes identifiers of a plurality of identity providing nodes and a respective verification address corresponding to each of the identifiers of the plurality of identity providing nodes, and the identifiers of the plurality of identity providing nodes include the identifier of the target identity providing node.

In a possible design, the communication unit 1101 is specifically configured to: receive a ninth message from the identity providing node, where the ninth message includes the identifier of the identity providing node and the verification address corresponding to the identifier of the identity providing node; and add, to the second mapping relationship, the identifier of the identity providing node and the verification address corresponding to the identifier of the identity providing node.

In a possible design, the sixth message further includes an identifier of at least one application or a type of at least one service. The processing unit 1102 is further configured to add the identifier of the at least one application or the type of the at least one service to the access permission information corresponding to the first persona identifier.

In a possible design, the communication unit 1101 is further configured to send the first authentication credential to the terminal device, where the first authentication credential is generated for the first persona identifier.

In a possible design, the communication unit 1101 is further configured to: receive a tenth message from the terminal device, where the tenth message is used to request the root identifier of the entity; and send the root identifier to the terminal device.

In a possible design, the tenth message includes an identifier of a SIM card, and the root identifier is determined based on a subscription permanent identifier SUPI corresponding to the identifier of the SIM card.

In a possible design, the processing unit 1102 is further configured to determine, based on first information corresponding to the identifier of the SIM card, attribute information corresponding to the root identifier, where the first information identifies the attribute information of the entity.

In a possible design, the tenth message includes a device identifier of the terminal device, and the root identifier is determined based on the device identifier.

In a possible design, the tenth message further includes second information, and the second information identifies the attribute information of the entity. The processing unit 1102 is further configured to determine the second information as attribute information corresponding to the root identifier.

In a possible design, the communication unit 1101 is further configured to send the second authentication credential to the terminal device, where the second authentication credential is generated for the root identifier.

In an implementation, the communication apparatus 1100 may perform the following functions.

The communication unit 1101 is configured to send a first message to a first network device, where the first message includes a first persona identifier, the first persona identifier identifies an entity that accesses the first application, and the first message is used to request attribute information of a target attribute identifier corresponding to the entity.

The communication unit 1101 is further configured to receive, from the first network device, the attribute information corresponding to the target attribute identifier, where the attribute information corresponding to the target attribute identifier is determined from at least one piece of attribute information corresponding to the first persona identifier.

In a possible design, the first message further includes a first authentication credential, and the first authentication credential is used to verify the first persona identifier.

The foregoing is merely an example. The communication unit and the processing unit in the communication apparatus 1100 may further perform another function. For more detailed descriptions, refer to related descriptions in the foregoing method embodiments. Details are not described herein again.

In the foregoing embodiments provided in this application, the methods provided in embodiments of this application are described from a perspective of the communication apparatus serving as an execution body. To implement functions in the methods provided in embodiments of this application, the communication apparatus may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

For example, when hardware is used for implementation, for hardware implementation of the communication apparatus, refer to FIG. 12 and related descriptions thereof.

With reference to FIG. 12, the communication apparatus may include one or more processors 1202, a memory 1203, one or more applications (not shown), and one or more computer programs 1204. The foregoing devices may be connected through one or more communication buses 1201. The one or more computer programs 1204 are stored in the memory 1203 and are configured to be executed by the one or more processors 1202. The one or more computer programs 1204 include instructions, and the instructions may be used to perform the method in any one of the foregoing embodiments. The one or more processors 1202 may perform functions of the communication unit 1101 and the processing unit 1102.

An embodiment of this application further provides a computer-readable storage medium. The computer-readable storage medium stores computer instructions. When the computer instructions are run on a communication apparatus, the communication apparatus is caused to implement the communication methods in the foregoing embodiments.

An embodiment of this application further provides a computer program product. When the computer program product is run on a computer, the computer is caused to perform the communication methods in the foregoing embodiments.

The communication apparatus, the computer-readable storage medium, the computer program product, or the chip provided in embodiments of this application is configured to perform the corresponding methods provided above. Therefore, for beneficial effects that can be achieved by the communication apparatus, the computer-readable storage medium, the computer program product, or the chip, refer to the beneficial effects of the corresponding methods provided above. Details are not described herein again.

Based on the descriptions of the foregoing implementations, a person skilled in the art may understand that, for ease and brevity of description, division into the foregoing functional modules is merely used as an example for illustration. During actual application, the foregoing functions may be allocated to different functional modules and implemented based on a requirement. In other words, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A communication method, wherein the method is applied to a first network device, and comprises:
receiving a first message from a first application, wherein the first message comprises a first persona identifier, the first persona identifier identifies an entity that accesses the first application, and the first message is used to request attribute information of a target attribute identifier corresponding to the entity; and
sending, to the first application, the attribute information corresponding to the target attribute identifier, wherein the attribute information corresponding to the target attribute identifier is determined from at least one piece of attribute information corresponding to the first persona identifier.

2. The method according to claim 1, wherein the first message further comprises a first authentication credential, and the method further comprises:
confirming, by using the first authentication credential, that the first persona identifier has been verified.

3. The method according to claim 1 or 2, wherein the first message further comprises a first identifier, the first identifier identifies the first application or a target service in the first application, the target service is a service that is in the first application and accessed by the entity, and the method further comprises:
confirming, by using access permission information corresponding to the first persona identifier, that the first identifier has been verified.

4. The method according to claim 3, wherein the first identifier identifies the first application; and
the confirming, by using the access permission information corresponding to the first persona identifier, that the first identifier has been verified comprises:
if the access permission information corresponding to the first persona identifier comprises the first identifier, confirming that the first identifier has been verified.

5. The method according to claim 3, wherein the first identifier identifies the target service; and
the confirming, by using the access permission information corresponding to the first persona identifier, that the first identifier has been verified comprises:
determining a service type of the target service based on the first identifier; and
if the access permission information corresponding to the first persona identifier comprises the service type of the target service, confirming that the first identifier has been verified.

6. The method according to any one of claims 1 to 5, wherein the method further comprises:
sending a second message to a terminal device, wherein the second message is used to request verification information corresponding to a first verification identifier, the first verification identifier is determined based on the first mapping relationship and the target attribute identifier, the first mapping relationship comprises a plurality of attribute identifiers and a respective first verification identifier corresponding to each of the plurality of attribute identifiers, the plurality of attribute identifiers comprise the target attribute identifier, and the first application is installed on the terminal device; and
receiving a third message from the terminal device, wherein the third message comprises the verification information corresponding to the first verification identifier, and the third message is used to request to verify the verification information.

7. The method according to any one of claims 3 to 5, wherein the method further comprises:
sending a fourth message to a terminal device, wherein the fourth message is used to request an authorization, and the authorization comprises allowing the first application or the target service related to the first identifier to obtain the attribute information corresponding to the target attribute identifier; and
receiving a fifth message from the terminal device, wherein the fifth message indicates the authorization.

8. The method according to any one of claims 1 to 7, wherein the method further comprises:
receiving a sixth message from the terminal device, wherein the sixth message comprises a root identifier of the entity, the root identifier uniquely identifies the entity, and the sixth message is used to request the first persona identifier corresponding to the root identifier;
generating the first persona identifier corresponding to the root identifier; and
sending the first persona identifier to the terminal device.

9. The method according to claim 8, wherein the sixth message further comprises a second authentication credential, and the method further comprises:
confirming, by using the second authentication credential, that the root identifier has been verified.

10. The method according to claim 8 or 9, wherein the sixth message further comprises a second identifier, the second identifier identifies identity information of the entity, and the method further comprises:
sending a seventh message to a second network device, wherein the seventh message is used to request to verify the second identifier; and
receiving an eighth message from the second network device, wherein the eighth message indicates that the second identifier has been verified.

11. The method according to claim 10, wherein the second identifier comprises an identity of the entity, the second network device is a preset identity providing node, the seventh message is used to request to verify the identity of the entity, and the eighth message indicates that the identity of the entity has been verified.

12. The method according to claim 10, wherein the second identifier comprises an identity of the entity and an identifier of a target identity providing node;
the sending the seventh message to the second network device comprises:
sending the seventh message to the target identity providing node based on the identifier of the target identity providing node, wherein the seventh message is used to request to verify the identity of the entity; and
the receiving the eighth message from the second network device comprises:
receiving the eighth message from the target identity providing node, wherein the eighth message indicates that the identity of the entity has been verified.

13. The method according to claim 12, wherein the sending the seventh message to the target identity providing node based on the identifier of the target identity providing node comprises:
sending the seventh message to the target identity providing node by using a verification address corresponding to the identifier of the target identity providing node, wherein the verification address corresponding to the identifier of the target identity providing node is determined based on the second mapping relationship and the identifier of the target identity providing node, the second mapping relationship comprises identifiers of a plurality of identity providing nodes and a respective verification address corresponding to each of the identifiers of the plurality of identity providing nodes, and the identifiers of the plurality of identity providing nodes comprise the identifier of the target identity providing node.

14. The method according to claim 13, wherein the method further comprises:
receiving a ninth message from the identity providing node, wherein the ninth message comprises the identifier of the identity providing node and the verification address corresponding to the identifier of the identity providing node; and
adding, to the second mapping relationship, the identifier of the identity providing node and the verification address corresponding to the identifier of the identity providing node.

15. The method according to any one of claims 8 to 14, wherein the sixth message further comprises an identifier of at least one application or a type of at least one service, and the method further comprises:
adding the identifier of the at least one application or the type of the at least one service to the access permission information corresponding to the first persona identifier.

16. The method according to any one of claims 8 to 15, wherein the method further comprises:
sending the first authentication credential to the terminal device, wherein the first authentication credential is generated for the first persona identifier, and the first authentication credential is used to verify the first persona identifier.

17. The method according to any one of claims 8 to 16, wherein the method further comprises:
receiving a tenth message from the terminal device, wherein the tenth message is used to request the root identifier of the entity; and
sending the root identifier to the terminal device.

18. The method according to claim 17, wherein the tenth message comprises an identifier of a subscriber identity module SIM card, and the root identifier is determined based on a subscription permanent identifier SUPI corresponding to the identifier of the SIM card.

19. The method according to claim 18, wherein the method further comprises:
determining, based on first information corresponding to the identifier of the SIM card, attribute information corresponding to the root identifier, wherein the first information identifies the attribute information of the entity.

20. The method according to claim 17, wherein the tenth message comprises a device identifier of the terminal device, and the root identifier is determined based on the device identifier.

21. The method according to claim 20, wherein the tenth message further comprises second information, the second information identifies the attribute information of the entity, and the method further comprises:
determining the second information as attribute information corresponding to the root identifier.

22. The method according to any one of claims 17 to 21, wherein the method further comprises:
sending the second authentication credential to the terminal device, wherein the second authentication credential is generated for the root identifier, and the second authentication credential is used to verify the root identifier.

23. A communication method, wherein the method is applied to a first application, and comprises:
sending a first message to a first network device, wherein the first message comprises a first persona identifier, the first persona identifier identifies an entity that accesses the first application, and the first message is used to request attribute information of a target attribute identifier corresponding to the entity; and
receiving, from the first network device, the attribute information corresponding to the target attribute identifier, wherein the attribute information corresponding to the target attribute identifier is determined from at least one piece of attribute information corresponding to the first persona identifier.

24. The method according to claim 23, wherein the first message further comprises a first authentication credential, and the first authentication credential is used to verify the first persona identifier.

25. A communication apparatus, comprising a processor and a memory, wherein
the processor is configured to execute a computer program or instructions stored in the memory, to cause the communication apparatus to implement the method according to any one of claims 1 to 22, or implement the method according to claim 23 or 24.

26. A computer-readable storage medium, storing a computer program or instructions, wherein when the computer program or the instructions are run on a computer, the computer-readable storage medium is caused to implement the method according to any one of claims 1 to 22, or implement the method according to claim 23 or 24.

27. A chip, comprising a processor, wherein the processor is coupled to a memory, and is configured to execute a computer program or instructions stored in the memory, to cause the chip to implement the method according to any one of claims 1 to 22, or implement the method according to claim 23 or 24.

28. A communication system, comprising a first network device and a first application, wherein the first network device is configured to implement the method according to any one of claims 1 to 22, and the first application is configured to implement the method according to claim 23 or 24.

29. A computer program product, wherein when a computer reads and executes the computer program product, the computer is caused to implement the method according to any one of claims 1 to 22, or implement the method according to claim 23 or 24.
